# EUROPEAN PATENT APPLICATION

(11) **EP 4 607 817 A1**
(43) Date of publication of application: **27.08.2025**
(21) Application number: 24159068.6
(22) Date of filing: 22.02.2024
(51) Int. Cl.: H04B 7/185, H04L 9/00

(54) **METHOD FOR MANAGING A SECURED CHANNEL IN A SATELLITE COMMUNICATION**

(71) Applicant: Cysec SA, 1015 Lausanne (CH)
(72) Inventor: WILLY, SYLVAIN, 1213 ONEX (CH)
(74) Representative: Plasseraud IP

(57) **Abstract**

1. A method for managing a secured channel (16) in a satellite communication between an initiator (12) and a receiver (14) exchanging data according to the SDLS standards, the method comprising the steps of:
- requiring (102), from the initiator (12) or the receiver (14), the application of Extended Procedures of said SDLS standards;
- grouping (104) together such Extended Procedures by means of a concatenating operation;
- executing (108) such concatenated Extended Procedures respectively at the initiator (12) or at the receiver (14),
- verifying if the execution of the Extended Procedures succeeded and, in positive case, obtaining result data to be transmitted to the receiver (14) or to the initiator (12), respectively.

## Description

### Background

### Technical field

The present application relates to a method for managing a secured channel in a satellite communication.

### Related art

The field of space exploration has witnessed remarkable advancements in recent decades, driven by the continuous quest for scientific discovery, technological innovation, and enhanced communication capabilities. Efficient and secure transmission of data between spacecrafts and ground stations plays a critical role in ensuring the success of space missions.

In computer networking and telecommunication, a digital data transmission unit is called frame. A frame typically consists of a sequence of bits that indicate to a receiver the beginning and the end of a payload data within a stream of bits it receives.

In response to the evolving landscape of space missions and their increasing reliance on secure communications, the Space Data Link Security (SDLS) standard has emerged as a foundation for securing frames integrity and confidentiality. Published by the Consultative Committee for Space Data Systems (CCSDS) in 2015, the SDLS standard establishes provisions for frames encryption and authentication.

The purpose of the SDLS standard is to provide a structured method for applying frame authentication and/or frame payload encryption. From a general point of view, the SDLS standard can be seen as a method for implementing a *VPN-like* secured communication between two points: an initiator (e.g., a ground station) and a receiver (e.g, a satellite) or vice versa.

The SDLS protocol mainly consists of two procedures named "*applySecurity*" and "*processSecurity*"*.* The "*applySecurity*" operation takes a frame and replaces part of its content with protected data (authenticated and/or encrypted), adds a mandatory security header and optionally a security trailer. The "process Security" operation is responsible to handle a secured frame (authenticated and/or encrypted), to verify it and to decrypt it.

To perform these two operations, both the initiator (e.g., a ground station) and the receiver (e.g., a satellite) must share a same information on how the communication is secured (the configuration of a secured communication channel in SDLS terminology is called "*security association*" or "*SA*") and use a same key for cryptographic operations relating to a communication between each other.

It can readily be inferred that if the key used to secure a communication is compromised, a malicious actor could intercept and decode all communications or - even worse - could impersonate ground or satellite and transmit frames that are indistinguishable from the legitimate ones (e.g., with commands to execute).

Regular key rotation enhances forward secrecy, a property that ensures that even if a long-term secret key is compromised, past communication sessions remain secure; moreover, key rotation helps mitigate the risk of successful brute force attacks by limiting the amount of data encrypted with a single key. Finally, changing keys frequently minimizes the potential damage caused by unauthorized access.

However, while the SDLS standard provides a solid cryptographic base, it does not encompass the management of keys and security parameters, which are essential aspects of a comprehensive security framework.

To address this crucial aspect of space communications security, the CCSDS has developed Extended Procedures (SDLD-EP standard) that serve as a set of additional procedures focused on the effective management of keys and security parameters.

The SDLS-EP standard defines Key Management, Security Association Management, SDLS Monitoring and Control, and data structures required to operate the SDLS standard over a space datalink.

The SDLS-EP standard describes - among other - a set of procedures for transmitting new keys to a receiver and assigning them to a secured communication channel.

As mentioned above, in order to function, the configuration concerning the secured communication channel and the key to be used must be the same between the initiator and the receiver. In the event of an inconsistency, communication would no longer be possible, and in the worst case, communication with the receiver (e.g., the satellite) would be lost forever.

Especially in simpler satellites, redundant or "*emergency*" communication channels are not always available.

The replacement of keys and related reconfiguration of a secured communication channel is therefore a delicate operation that must be carried out flawlessly.

The SDLS-EP standard, while defining in general terms the management of keys and Security Associations parameters, doesn't provide enough details regarding the effective implementation of the different steps required to manage them, how the data must be treated and elaborated, how to revert back during a replacement phase in case of failure, etc.

There is therefore the need to have an innovative method for managing a secured channel in a satellite communication which allows signalling and executing Extended Procedures, performed based on the SDLS and SDLS-EP standards, while preventing failures occurring during such execution from affecting the secured channel, thus overcoming the problems of the prior art.

### Summary

In a first aspect, there is provided a method for managing a secured channel in a satellite communication between an initiator and a receiver exchanging data according to the SDLS standards, the method comprising the steps of:
- requiring, from the initiator or the receiver, the application of Extended Procedures of said SDLS standards;
- grouping together such Extended Procedures by means of a concatenating operation;
- executing such concatenated Extended Procedures respectively at the initiator or at the receiver,
- verifying if the execution of the Extended Procedures succeeded and, in positive case, obtaining result data to be transmitted to the receiver or to the initiator, respectively.

In a second aspect, the method further comprises transmitting the result data respectively to the receiver or to the initiator, the receiver or the initiator, respectively, applying such result data.

In a third aspect, the method further comprises receiving, respectively at the initiator or at the receiver, a confirmation from respectively the receiver or the initiator that the result data has been applied respectively at the receiver or at the initiator.

In an embodiment, executing further comprises storing rollback data representing an initial state of entities or objects involved in the execution of the Extended Procedures.

In an embodiment, verifying if the execution of the Extended Procedures succeeded further comprises, in negative case, restoring the rollback data.

In an embodiment, the method further comprises verifying and validating said concatenated Extended Procedures before executing them.

In an embodiment, verifying and validating the concatenated Extended Procedures comprises one or more of applying static and dynamic rules to the concatenated Extended Procedures.

In an embodiment, the method of the second aspect further comprises, before transmitting the result data, clearing, respectively at the initiator or at the receiver, a synchronization flag indicating that a state of entities or objects involved in the application of the Extended Procedures is no longer the same between the initiator and the receiver.

In an embodiment, the method of the second aspect further comprises, after having received the confirmation, executing a finalization phase to set the synchronization flag.

In a further aspect there is provided a system for managing a secured channel in a satellite communication comprising an initiator and a receiver communicating according to the SDLS standard, the initiator and the receiver comprising respectively a first control unit and a second control unit arranged to perform the method of the first aspect.

In an embodiment, the initiator further comprises first memory means and the receiver further comprises second memory means, respectively, the first control unit and the second control unit being arranged to respectively perform the method of the second aspect and, before transmitting the result data, clearing, into respectively said first memory means and second memory means, a synchronization flag indicating that a state of entities or objects involved in the application of the Extended Procedures is no longer the same between the initiator and the receiver.

In further aspects there is provided a computer program product comprising instructions which, when the program is executed by a computer, cause the computer to perform all the step of the method of the first aspect, and a computer readable medium comprising such a computer program.

### Brief description of the drawings

The invention will now be described with reference to the accompanying Figures of which:
Figure 1 illustrates a system for performing a method for managing a secured channel in a satellite communication according of the present invention; and
Figure 2 illustrate the steps of a method for managing a secured channel in a satellite communication according to the present invention.

### Detailed Description

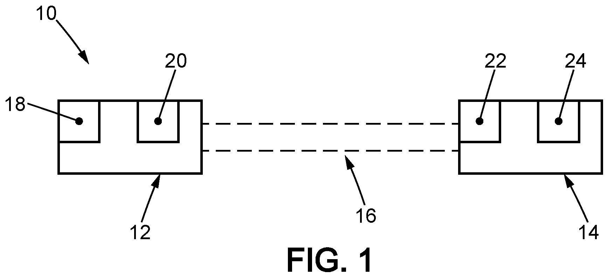

Figure 1 illustrates a system 10 comprising an initiator 12, preferably a ground station, and a receiver 14, preferably a satellite, connected each other through at least one secured communication channel 16.

Alternatively, both the initiator 12 and the receiver 14 are satellites.

The initiator 12 and the receiver 14 are arranged to communicate each other in a known manner according to the SDLS and the SDLS-EP standards over the secured communication channel 16.

Advantageously, in the frame of the SDLS and the SDLS-EP standards, the secured channel 16 is either a virtual channels (VC) or a multiplexer access point (MAP).

The initiator 12 comprises a first control unit 18 and first memory means 20.

The receiver 14 comprises a second control unit 22 and second memory means 24.

The first control unit 18 and the second control unit 22 are arranged to implement the SDLS standard and the SDLS-EP standard, i.e., to perform the steps and the procedures of these two standards in a known manner.

Furthermore, the first control unit 18 and/or the second control unit 22 is also arranged to implement a set of additional steps intended to prevent inconsistencies when an Extended Procedure is called, as detailed here below.

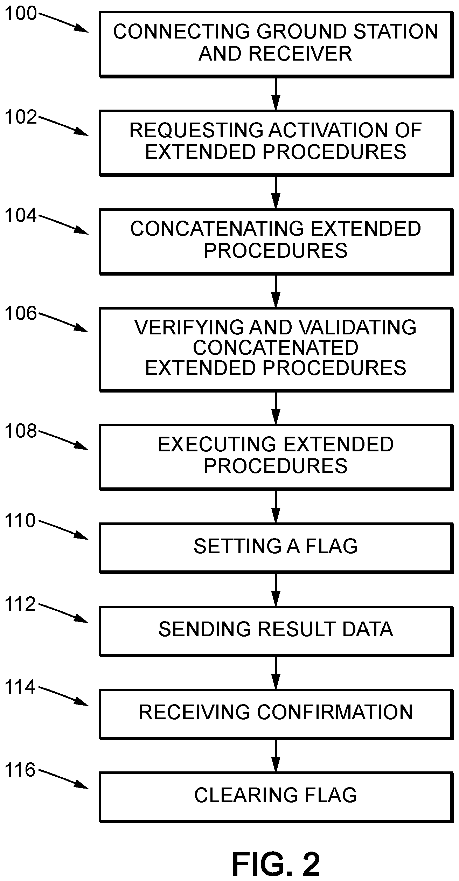

Figure 2 shows the steps of a method for managing a secured channel in a satellite communication according to the present invention.

In a first step 100, the initiator 12 and the receiver 14 are connected each other through the secured channel 16 and they exchange data according to the SDLS standard in a manner per se known. The communication, at this stage, is carried out for example using at least one pre-shared key *key_1* and at least one pre-shared security association *ass_1* which have been previously assigned to both the initiator 12 and the receiver 14 and are used, in a known manner, by both.

At a certain moment, in a next step 102, the initiator 12 requires, through its first control unit 18, the application of known Extended Procedures of said SDLS standard, for example to rotate said at least one pre-shared key *key_1* with a second key *key_2* and to update the security association *ass_1* accordingly, thus obtaining updated security association *ass*_1'.

For example, in the case of rotation of the at least one pre-shared key *key_1,* an operator, on the basis of guidelines, decides to rotate at least one key (e.g. once a week) by manually launching this operation through the first control unit 18. Alternatively, this operation is scheduled and then the execution of the key rotation operation is called automatically by the first control unit 18.

In a further next step 104, the first control unit 18 performs a concatenation of said Extended Procedures, to create a concatenated operation that contains all the required Extended Procedures grouped together.

Such concatenation offers a flexible approach for constructing complex procedures and plays an important role in validating the coherence and validity of the Extended Procedures.

Rather than encountering failures during the execution of the Extended Procedures, the parameters of each Extended Procedure are verified during next step 106 and executed during next step 108, detailed here below. Such steps 106 and 108 represent a preparation phase for a subsequent satellite communication.

In step 106, a verification and a validation of the concatenated Extended Procedures is performed before execution of the same. The verifications encompass the application of static and/or dynamic rules to the concatenated Extended Procedures.

Static rules involve validating parameters against predefined rules, such as allowed ID values, SDLS managed parameters and key types. Dynamic rules, on the other hand, involve asserting that objects targeted by the Extended Procedures are in an expected state prior to their execution. For instance, the failure of deactivating a non-existing key is verified.

To better illustrate this concept, the following concatenation operation is considered, that aims at executing three known Extended Procedures relating to rotation of a key: OTAR, which is an Extended Procedure used to send the receiver 14 a receiver second key *key_2'* identical to the second key *key_2, Rekey SA,* which is an Extended Procedure used to assign the receiver second key *key_2'* to the at least one pre-shared security association *ass_1* assigned at the receiver side to the secure channel 16 used for the communication, thus obtaining the updated security association *ass_1', Start SA,* which is an Extended Procedure used to activate at the receiver side the updated security association *ass_1'* in order to start a communication with the receiver second key *key_2'.* 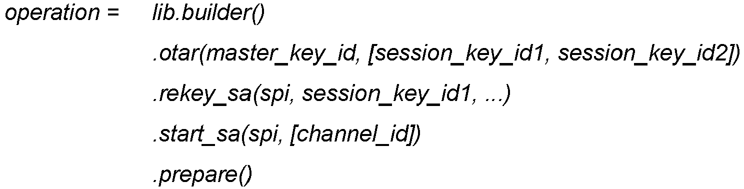 where_*master_key_id, session_key_id1, session_key_id2, spi and [channel_id]* are the *"managed parameters"* disclosed in the SDLS standards.

Alternatively, different known Extended Procedures can be concatenated, aiming at managing the secured channel 16.

For example, the SDLS-EP describes twenty-two Extended Procedures, and sixteen of these Extended Procedures are related to the management of security associations and key management, while a combination of these Extended Procedures is used to rotate a key. The standard also allows additional Extended Procedures to be defined. This process is also applicable to Extended Procedures defined *ad-hoc* and not described in the standard.

In a next step 108, the first control unit 18 executes the concatenated Extended Procedures as detailed here below, after having validated all of them statically and/or dynamically in step 106.

For example, in the case of rotation of the at least one pre-shared key *key_1,* in step 108 the at least one pre-shared security association *ass_1* is updated to refer to the second key *key_2* at the initiator side, thus obtaining the updated security association *ass_1'.*

At the end of step 108, the first control unit 18 verifies if the execution of the Extended Procedures succeeded and, in negative case, an error signal is generated.

In positive case, after the above-indicated modifications, instructions and parameters (i.e., a receiver second key *key_2'* identical to the second key *key_2* above-mentioned and to be used at the receiver side) to execute an equivalent procedure at the receiver side are provided as result data, and the method goes on with step 110 described below.

To provide even more versatility, in step 106 it is possible to disable checks that would still occur during the execution of the respective Extended Procedure. This flexibility allows the construction of operations that may be invalid during the preparation phase but have the potential to become valid by the time they are actually executed during a satellite communication.

In general, it is not possible to perform an operation that generates a conflict, for example, it is not possible to overwrite a key. Nevertheless, there may be special cases where it is desirable to force the execution of a series of Extended Procedures. Thanks to the method of the present invention, it is therefore possible to take advantage of the concatenation of several Extended Procedures and force their execution even if they are considered potentially harmful or invalid.

Advantageously, in step 108, the first control unit 18, during the execution of the Extended Procedures, also enable an Extended Procedure rollback safeguard: the execution of the Extended Procedures is handled in manner per se known and a record of ongoing operations is maintained into the first memory means 20. In particular, rollback data representing an initial state of entities or objects, per se known, involved in the execution of the Extended Procedures, are locked and stored into said first memory means 20.

For example, in the case of rotation of the at least one pre-shared key *key_1,* the first control unit 18 locks a key value of the at least one pre-shared key *key_1* (and other known attribute of said key) and the attributes of the at least one pre-shared security association ass_1 and stores them (the rollback data) into the first memory means 20, to enable the restoration of said entities if necessary.

Then, the first control unit 18 sequentially executes the concatenated Extended Procedures.

For example, in the case of rotation of the at least one pre-shared key *key_1,* as above-explained, in step 108 the at least pre-shared key *key_1* associated with the at least one pre-shared security association *ass_1* is replaced by the second key *key_2* at the initiator side, and the at least one pre-shared security association *ass_1* is updated to obtain the updated security association *ass_1'.*

Then, the first control unit 18 verifies if the execution of the Extended Procedures succeeded and, in negative case, in the event of a failure during such execution phase, the rollback data are retrieved from the first memory means 20 and restored (i.e., the key value of the at least one pre-shared key *key_1* and the at least one pre-shared security association *ass_1* are restored), and the process end.

In positive case, after the above-indicated modifications, instructions and parameters (i.e., a receiver second key *key_2'* identical to the second key *key_2* above-mentioned and to be used at the receiver side) to execute an equivalent procedure at the receiver side are provided as result data, and the method goes on with step 110 described below.

Once the execution phase concludes, regardless of success or failure, the lock on the rollback data, for example the key value of the at least one pre-shared key *key_1,* is released.

In a next step 110, the first control unit 18 clears a synchronization flag into the first memory means 20 indicating that the state of the entities or objects involved in the application of the Extended Procedures, for example the second key *key_2* now associated to the updated security association *ass_1'* at the initiator 12, is no longer the same between the initiator 12 and the receiver 14.

The above steps are performed locally at the first control unit 18, and then, in a step 112, the result data, for example the instructions and the parameters above-mentioned to execute the equivalent procedure at the receiver side, are transmitted to the receiver 14.

It is worth remembering that all communication is asynchronous and that a satellite could be flying at a very long distance from the ground station, so it is not always possible to send an Extended Procedure (or a concatenation of Extended Procedures) and check its success immediately: it could take hours before having a new connection.

In the case above presented of rotation of a key, the second key *key_2* is available at the initiator 12, the transmission of the receiver second key *key_2'* to the satellite (OTAR) is prepared and *Rekey SA* is executed at the initiator side, then the new configuration is activated (*Start SA*) at the initiator side.

If at the initiator side everything has properly worked, the command to execute the corresponding Extended Procedures (the result data) is sent to the receiver 14.

When the receiver 14 receives said result data, it concatenates them according to step 104 and executes them according to step 108 above disclosed and, advantageously, it also performs the validation and verifications phases of step 106. For example, it takes the receiver second key *key_2'* (delivered with OTAR), executes *Rekey SA* (thus obtaining the updated security association *ass_1*) and activates (*Start SA*) the new configuration.

That is, when the receiver 14 receives the result data (i.e., the receiver second key key_2'), applies them (i.e., associates the receiver second key *key_2'* to the at least one pre-shared security association *ass_1* which was previously assigned to it, thus obtaining the updated security association *ass_1'* at the receiver side).

Then, the next communication is performed with the new configuration (i.e., secured with the second key).

Thanks to the method of the present invention, it is possible to know that on the ground and in space either all the desired Extended Procedures or none of them have been executed.

Meanwhile, the synchronization flag remains unset until the first control unit 18 receives, in a step 114, a confirmation from the receiver 14 that the result data have been applied (i.e., the receiver second key *key_2'* and the related updated security association *ass_1'* have been applied at the receiver side).

After reception of such confirmation, in a step 116, a finalization phase is executed, wherein the synchronization flag is set.

Alternatively, the confirmation is not sent from the receiver 14 and in step 116 the synchronization flag is set by the control unit after a predetermined time has passed from when the result data have been sent to the receiver 14.

Advantageously, the finalization step 116 also encompasses notifying a user, for example through a display 26 of the ground station 12, the successful completion of the process.

Alternatively, there is no finalization step 116.

Alternatively, all the above steps 102 - 116 can be performed at the receiver side with the second control unit 22 of the receiver 14 requiring application of the Extended Procedures. In such a case, the rollback data are stored into the second memory means 24.

Clearly, the principle of the invention remaining the same, the embodiments and the details of production can be varied considerably from what has been described and illustrated purely by way of non-limiting example, without departing from the scope of protection of the present as defined in the attached claims.

## Claims

1. A method for managing a secured channel (16) in a satellite communication between an initiator (12) and a receiver (14) exchanging data according to the SDLS standards, the method comprising the steps of:
- requiring (102), from the initiator (12) or the receiver (14), the application of Extended Procedures of said SDLS standards;
- grouping (104) together such Extended Procedures by means of a concatenating operation;
- executing (108) such concatenated Extended Procedures respectively at the initiator (12) or at the receiver (14),
- verifying if the execution of the Extended Procedures succeeded and, in positive case, obtaining result data to be transmitted to the receiver (14) or to the initiator (12), respectively.

2. The method of claim 1, further comprising
transmitting (112) the result data respectively to the receiver (14) or to the initiator (12), the receiver (14) or the initiator (12), respectively, applying such result data.

3. The method of claim 2, further comprising
receiving (114), respectively at the initiator (12) or at the receiver (14), a confirmation from respectively the receiver (14) or the initiator (12) that the result data has been applied respectively at the receiver (14) or at the initiator (12).

4. The method of any of the above claims, wherein executing (108) further comprises storing rollback data representing an initial state of entities or objects involved in the execution of the Extended Procedures.

5. The method of claim 4, wherein verifying if the execution of the Extended Procedures succeeded further comprises, in negative case, restoring the rollback data.

6. The method of any of the above claims, further comprising verifying and validating (106) said concatenated Extended Procedures before executing them.

7. The method of claim 6, wherein verifying and validating (106) the concatenated Extended Procedures comprises one or more of applying static and dynamic rules to the concatenated Extended Procedures.

8. The method of claim 2, further comprising, before transmitting (112) the result data, clearing (110), respectively at the initiator (12) or at the receiver (14), a synchronization flag indicating that a state of entities or objects involved in the application of the Extended Procedures is no longer the same between the initiator (12) and the receiver (14).

9. The method of claim 8, further comprising, after having received the confirmation, executing (116) a finalization phase to set the synchronization flag.

10. A system (10) for managing a secured channel (16) in in a satellite communication comprising an initiator (12) and a receiver (14) communicating according to the SDLS standard, the initiator (12) and the receiver (14) comprising respectively a first control unit (18) and a second control unit (22) arranged to perform the method of any of the claims 1 to 9.

11. The system of claim 10, wherein the initiator (12) further comprises first memory means (20) and the receiver (14) further comprises second memory means (24), respectively, the first control unit (18) and the second control unit (22) being arranged to respectively perform the method of claims 8 or 9 and to clear the synchronization flag into respectively said first memory means (20) and second memory means (24).

12. A computer program product comprising computer readable instructions which, when executed by a computer, perform all the steps of the method of any of claims 1-9.

13. A computer readable medium comprising the computer program of claim 12.
